(19) Europäisches Patentamt
European Patent Office
Office européen des brevets

(11) **EP 1 765 094 B2**

(12) **NEW EUROPEAN PATENT SPECIFICATION**
After opposition procedure

(45) Date of publication and mention
of the opposition decision:
**26.08.2015 Bulletin 2015/35**

(45) Mention of the grant of the patent:
**30.07.2008 Bulletin 2008/31**

(21) Application number: **05747848.9**

(22) Date of filing: **24.05.2005**

(51) Int Cl.:
**A23L 1/325** (2006.01)   **A23J 3/30** (2006.01)
**A23J 3/32** (2006.01)   **A23J 3/34** (2006.01)
**A23J 1/04** (2006.01)

(86) International application number:
**PCT/NO2005/000172**

(87) International publication number:
**WO 2005/115176 (08.12.2005 Gazette 2005/49)**

(54) **HYDROLYSED MARINE PROTEIN PRODUCT, PROCESS FOR THE PRODUCTION THEREOF, AND APPLICATION**

HYDROLYSIERTES MEERESPROTEINPRODUKT, VERFAHREN ZU SEINER HERSTELLUNG UND VERWENDUNG

PRODUIT PROTEINIQUE MARIN HYDROLYSE, SON PROCEDE DE PRODUCTION ET SON APPLICATION

(84) Designated Contracting States:
**AT BE BG CH CY CZ DE DK EE ES FI FR GB GR HU IE IS IT LI LT LU MC NL PL PT RO SE SI SK TR**

(30) Priority: **26.05.2004 NO 20042188**

(43) Date of publication of application:
**28.03.2007 Bulletin 2007/13**

(73) Proprietor: **Norcape Biotechnology AS**
**0280 Oslo (NO)**

(72) Inventors:
• **TORP, Eddy, G.**
**N-0280 Oslo (NO)**

• **TORRISSEN, Osvald**
**N-8012 Bodø (NO)**

• **Michael Charles Doolan**
**Northamptonshire NN 14 3EZ (GB)**

(74) Representative: **Sønstevold, Anne et al**
**Zacco Norway AS**
**Haakon VII's gt. 2**
**P.O. Box 2003 Vika**
**0125 Oslo (NO)**

(56) References cited:
**EP-B1- 0 566 645    EP-B1- 0 785 726**
**WO-A1-92/21248    WO-A2-01/28353**
**GB-A- 1 216 353**

**Description**

**FIELD OF INVENTION**

The present invention relates to a method for the production of hydrolysed marine protein product.

The protein product may be hydrolysed by enzymatic activity, bacterial activity, acids, cooking or any combination of these. The protein product may also include stickwater peptide fraction containing bioactive peptides. Feed product could be any nutritional product comsumable by any animal including humans.

**BACKGROUND OF INVENTION**

By-products from fisheries, animal husbandry and marine aquaculture are sources of protein, carbohydrate, oil and fat. The volume of by-products from the fish processing, dairy and foodstuff industry is enormous, and growing as e.g. aquaculture develops further. This presents both logistical and environmental challenges. To use large amounts of traditional fish by-products for domesticated farm animals is practically difficult as large volumes of meal and silage are produced from product that when several days old would give the products an off taste and could affect the health of the animals. The production of LT (low temperature meal) or higher grade meal from fresh fish, without these problems, has been demonstrated to improve feed quality and growth performance. Claims have already been made about the value of hydrolysates as healthy products. (Journal of Food Science - Functional properties of Herring protein hydrolysate. In the dairy field Maubois et al US patent 4427558 - Hydrolysis of whey proteins - describe the use of foods as medicines: Animal Feed Sci. Technology July 1996 - Oullet D.R. Hydrolysed proteins in ruminant nutrion has been considered, as a means of improving milk production and limiting the loss of nitrogen through excretion).

The use of whey as animal feed is well established based on the functional properties of the proteins and the energy supplied by the lactose. Standard fishmeal is often added at approximately 5% to enhance performance. The feeding of young pigs with this is especially beneficial. Whey is also used for calf supplements, calf milk replacers and for dairy cows. In addition porcine and bovine plasma proteins have been used extensively as a feed to improve health, growth and general performance. The use of plasma proteins has now ended in the European Community following the recognition that feeding mammalian species with their own proteins can cause major health risks. The problems of BSE (Bovine Spongiform Encephalopathy) are believed to have been caused by this practice. The use of mammalian proteins (unless from milk) in animal feeds (except carnivores) is now banned throughout the European community. The exception is fish protein which is from a completely different genus which can be used to feed animals, including avaian, mammals and humans.

As the demand for whey proteins has increased worldwide, substitute proteins, mainly soy flour, have been added to make whey substitutes. These proteins are mainly in their raw, native state or as soy flour and there are problems associated with the digestion and absorption of these proteins. Trypsin, a natural proteolytic enzyme in the gut, is inhibited by certain amino acid sites present in soy proteins. This affects the digestibility for e.g. young pigs that have low levels of trypsin.

Fish proteins and fish meal have also been used historically as a good source of protein and minerals for the dairy, pig and poultry industries. They are naturally good sources of the essential amino acids lysine and methionine. Trace elements of iodine and selenium are also advantageous. This is set to continue and the demand will increase if the technical issues of purity, salt content and undesirable nitrogen compound levels are resolved.

The mixture of hydrolysed marine protein combined with the natural sweetness of lactose and the improved quality is all based on removing any unwanted biogenic amine by membrane technology as suggested here.

The availability of clarified marine protein hydrolysate and stickwater peptide fraction containing bioactive peptides, now allows for the replacement of the valuable whey proteins in the ultrafiltration permeate from dairies. Feeding pigs with these beneficial marine proteins has been compared in tests with mammalian plasma proteins and shown to enhance performance (European patent application EP 09512 837 A1). It is especially rich in the essential amino acids lysine and methionine. Lysine is particularly important in pig diets. Other tests have shown that the nutritional value of fish hydrolysate by using controlled hydrolysis of acidified ensilage can enhance growth but the degree of hydrolysis also affects bitterness. (Enzymatic Hydrolysis of by products from fish processing - Journal of Science Food & Agriculture 80-:581-589 (2000)).

High levels of histamine can cause scombroid poisoning. The symptoms of this after a short incubation period include a rash, facial flushing, vomiting, diarrhea, dyspnea (difficult or labored breathing), headaches and metallic/peppery mouth taste. High levels of toxic amines are absorbed in the intestine, and normally de-toxified by the liver and then eliminated by the kidneys, but prolonged exposure ultimately provokes disorder in the organs cells, leading to liver and kidney failure. According to the FDA in America fish with greater than 50 ppm histamine are considered spoiled, although poisoning generally occurs at greater than 200 ppm. The use of spoiled fish, waste and the combination of poor handling generally leads to high levels of histamine in meal and other products.

In the dairy industry and to a smaller extent the fish industry, the use of membrane technology has enabled the processors to separate proteins from the traditional by-products. Whey is the by-product of cheese and casein manufacturing. It has been used for centuries as a feed product for animals, especially dairy cows and pigs. It contains all the soluble milk proteins as albumins and immunoglobulins, and anti-microbial agents such as lactoferrin and lactoperoxidase. These are natures means of protection for young animals. The development of membrane filtration has enabled dairy companies to exploit the value of these highly nutritious proteins for infant formula, bakery products, health foods and improved quality dairy products. In turn this has created a surplus of ultra filtration (UF) permeates that are often difficult to dispose of.

The proteins constitute only 10-12% of the dry material in whey. The remaining 90% is made up of lactose and minerals, especially physiologically important macrominerals such as magnesium, calcium, phosphorus, and potassium, plus non-protein nitrogen. The minerals present in UF permeate are utilized more effectively by the pig than the minerals in vegetable feeds. (Principles of Swine Nutrition - Texas A&M University). Lactose forms approximately 75% of the remaining dry matter in whey and is the main energy source for infants in mammalian species. Efforts have been made to combine refined lactose produced commercially with synthetic amino acids to substitute whey in nursery diets (USA Animal and Dairy Science - Dove 1998) and shown that the performance is similar to whey. It has been demonstrated in these tests that lactose and amino acids can be substituted for whey in the diets of early weaned pigs for all but 5% of the whey in the diet. By reducing the whey in the diet pig producers can decrease the costs of the diets for early weaned pigs. In these tests a fish meal level of 5% was also present in all trials.

Some studies have shown (J Food Sci Vol 64 No.6 1999. Functional Properties of Fish Hydrolysate from Herring [Clupea harengus]) when hydrolysed using similar enzymatic methods produces an hydrolysate with good emulsifying stability and adequate foam expansion capabilities. Compared to standard meal production the hydrolysate protein content was increased in the aqueous fraction whilst the lipid content decreased substantially, allowing for better fat separation.

Some novel methods for production of dry feed have also been developed - Dry Feed for fish US patent 6168 815 Alfa Laval and US Patent 6036983 NovoNordisk AS.

The challenge is to produce a high quality protein derivative from these by-products that has low mineral levels, especially sodium and chloride, and low levels of undesirable amine compounds and other rest products of enzymatic and microbial degradation of amino acids.

The use of UF on hydrolysed fish proteins has been attempted commercially on several occasions but has always failed due to the inefficiencies of the process, the costs, the membranes system and membrane materials available.

A second challenge exists because of bitterness caused by peptone production. Prior art decsribe flavour control etasblished by the sweetening of peptones and protein fractions by incubation with a lactobacilli. US patent 6214585 decribes that lactobacilli can utilize lactose as a substrate so the addition of milk protein UF permeate containing lactose would greatly enhance this process. The process according to the present invention reduces the off flavour problems by reducing the content of biogenic amines. Hereby added lactose will be maintained and lower need for addition of lactobacilli. The application WO 01/28353 discloses a protein hydrolysate for human consumption, animal feed and cosmetics, produced by the use of marine proteases, and having good organoleptic properties. The hydrolysis solution can optionally be treated using sedimentation, filtration or centrifugation.

Prior art exists for the use of ceramic microfiltration on stickwater. This is in commercial use in Norway, producing a permeate that is sold as food additive, for fish soups, flavourings and as an ingredient. The membranes used are 0.2 micron titanium oxide membranes manufactured by Membralox (France). European Patent Application EP 0951 837 A1 considers the production of bioactive peptides to enhance the growth of animals, involving the preparation and use in compositions for enhancing the growth of warm bodied animals and fish. The summary presents the invention as the manufacture of a bioactive peptide composition using enzymatic hydrolysis using enzymes derived form the stomach of Atlantic cod. This is compared to plasma protein (blood egg whey) and offered as an alternative protein for growth enhancement of warm blooded mammals. As in standard hydrolysis, the present invention uses enzymes at a controlled time and temperature to produce a standard product. Comparative trials show the benefits of using these peptides as a substitute for plasma proteins.

## DESCRIPTION OF THE INVENTION

The current hydrolyzed protein products used e.g. as an ingredient in feed contains a high level of monovalent ions and biogenic amines which as described elsewhere are toxic and gives a bad taste to the product and is a problem.

This problem is solved by the present invention. A new hydrolyzed protein product is provided comprising a significant reduction in the level of non protein nitrogen, amines and monovalent ions, reducing the toxic effect of biogenic amines and the high concentration of salt.

Further there is a challenge during the process of production of hydrolyzed protein product to get rid of the huge volume of water. Normally the water is removed by evaporation which is a highly energy consuming process.

The present invention solves this problem by combining UF and NF thereby removing more than 70% of the water. The energy consuming evaporation step is thus almost eliminated.

Such a significant reduction of small molecular weight molecules and water was unexpected as the physical properties of stickwater and silage make them very difficult to process with most industrial membranes.

The combined use of a ceramic UF at high temperature and the controlled concentration by NF gave a high final product concentration and with the removal of undesirable compounds a significant increase in quality that converts a problem material into a desirable product

An object of the present invention is to provide a hydrolyzed protein product or a purified stickwater with a minimum level of biogenic amines and monovalent ions from the NF.

Another object of the present invention is to provide a cost- effective process for the production of said product.

The production of hydrolysate marine protein poduct comprising low salt, low biogenic amines and NPN (non - protein nitrogen) is described. This product is used as an ingredient of feed for animals, humans and microorganisms e.g. improving the quality of whole meal. Further it is utilized when blended with ultrafiltration permeate (75% lactose) from milk products as an improved animal feed ingredient, to substitute whey, milk, other protein substitutes such as soy, wheat and their derivatives, in feed formulas.

The present invention relates to a method for the production of a hydrolysed marine protein. In particular the invention relates to a process for the production of a hydrolysed marine protein product having a reduced level of monovalent ions and biogenic amine groups and other rest products of enzymatic, cooking, acids and microbial degradation or any combination thereof.

The salt content arises from the salt content of the organism used and from the sea water used in pumping the fish. The undesirable small nitrogen compounds (NPN and biogenic amines) are created by hydrolytic action on the protein source.

The process according to the invention is a process for the production of a hydrolysed marine protein product comprising a reduced level of monovalent ions and biogenic amine groups (NPN) and other rest products of enzymatic, cooking, acids and microbial degradation or any combination thereof, wherein the level of monovalent ions and biogenic amines is reduced by combining the steps of UF and NF, comprising the following steps:

- homogenizing by-product from fish and/or other marine industries/sources;
- controlled hydrolyses of said proteins and/or separation of stickwater from processing of marine raw material;
- ultrafiltration to provide a clarified marine protein hydrolysate;
- nanofiltration of the clarified UF permeate to remove monovalent ions, biogenic amines and water;
- drying of the NF concentrate and UF concentrate separately or a combination thereof by spray, vacuum or any other drying method.

The resultant purified concentrated blend of refined fish protein hydrolysate containing bioactive peptides can then be recombined with the oils and proteins when removed from the stickwater or alternatively blended with ultrafiltration permeates of whey or milk and milk products containing no significant levels of milk protein. This latter product can be used for animal feed. A refined fish protein hydrolysate can also be prepared by enzymatic degradation of an acidified mix of fish processing by-products and processing by the same method.

In one embodiment these two products are combined to form a feed product with both the necessary protein and carbohydrate sources. The presence of lactose in the ultrafiltration permeate of whey is especially beneficial as an energy source for young weaning pigs. The addition of the fish protein hydrolysate treated by UF or stickwater UF permeate, supplies all of the essential, (particularly lysine) and non-essential amino acids. All the essential amino acids, trace elements and minerals are also present. Each has a specific role in supporting growth and nutrition, which is combined in this product. In the normal production of these products without a Nanofiltration (NF) step, the presence of high levels of sodium chloride, plus the bacterial degradation of protein to create histamine, and the derivatives, putrecine and cadaverine can at low levels limit the acceptability and addition to feeding young pigs and other animals.

The hydrolysed fish protein can be widely used as a component of a variety of products. Preferentially the hydrolysed fish protein is intended as a feed product especially for porcine and bovine (dairy cow) species but it may be fed all types of animals, where fish diet is traditional (mink and fox for fur production) and is equally beneficial in animals such as domesticated feline and canine species as well as humans.

The invention substantially eliminates the problem of high levels of salts and biogenic amines and other rest products of enzymatic and microbial degradation of amino acids by the production of a higher quality product based on new methods of filtration. For the whole meal recombined from the UF and NF systems after water and solute removal it means the production of a fish meal product that can match the LT levels of quality. The use of this process to produce an NF concentrate that is then combined with the milk sugars contained in milk protein permeate can help to improve flavor and mask any bitterness associated with peptones produced from hydrolysed proteins.

The protein hydrolysate, contains high levels of sodium chloride. Bacterial degradation of protein creates histamine, and its derivatives, putrecine and cadaverine which are toxic. The invention also relates to the significant removal of these undesirable compounds by using nanofiltration (NF) membranes on either the fish protein hydrolysate or stickwater permeates that have been treated by ultrafiltration. In doing so the UF permeate is concentrated by NF to a level of 4 to 5 times and the removal of up to 80% water containg a similar proportion of the undesirable solutes. This results also in significant energy savings of up to 50 % of the costs of standard evaporation.

Another significant advantage of the hydrolysed marine protein product and thus the feed product, is that the amount of monovalent ions is reduced compared to conventional animal feed. It is known that a high nutrition of monovalent ions (salt) leads to increased water consumption and a lack of sufficient water cause serious toxicity in animals, especially young ones. The toxicity symptoms are lack of diet, lack of balance, erratic behavior and ultimately death (lesions are typically found in the brain). The reduction of monovalent ions and lowering of the mineral content by use of the nanofiltration according to the invention improves the mineral profile. Nanofiltration therefore provides a protection of the young animals against such disorders and retains the important divalent compounds. The use of nanofiltration on the clarified hydrolysate protein reveals in addition a significant reduction in the amount of amine groups, such as cadaverine, putracine, histamine and other unwanted amines that may be present as a result of microbiological degradation -often due to microorganisms which are normally present in the by-products as a result of poor handling, age, and not processing at source. The common causative bacteria are Clostridium, Salmonella Proteus and Escherichia Coli and contamination occurs before the acidification of the silage. The symptoms in fur animals of excessive histamine in the diet are diarrhea, decreased feed consumption, reduced body weight gain relative to feed intake in direct proportion to the level of Histidine found, vomiting and dilated stomachs. (Nutrient requirements of Mink and Foxes 1982 National Academy Press).

These problems have now been resolved by the present invention. According to the present invention better processing methods are provided. The invention uses techniques developed from the advances in the dairy processing industry where the large volumes (average of 1 million liters per day of liquid in a single factory) have led to cost reductions, efficient designs, better more resilient membrane technology and construction. The membrane used is similar to that used in oil and water separation. Further, specific membrane materials are used that have been used in high salt content environments, that offer better resistance against fouling by fats and oils, that are significantly more hydrophobic and give better mechanical protection against low pH and the high temperatures of stickwater when used in these processes. Better membrane selection and equipment design to optimize flow and pressure conditions allows for higher scale, more cost effective processing of marine protein hydrolysates or stickwater fractions containing bioactive peptides.

More traditionally the by-products from fish processing have been made into silage with he remains of the carcase after filleting, the viscera, and skeletons have all being used to make low grade fish meal from the silage. Whole fish such as capelin and herring are also used. The standard process for silage is to collect the by-products and acidify with either mineral or organic acids to a pH below 4.0. This prevents bacterial growth and partially hydrolyses the proteins. The addition of proteolytic enzymes that can operate at low pH further enhances the hydrolysis, producing a mixture of peptides, oils, slurry, bones and scales. This is sometimes homogenised to form an even mixture. Centrifugal Separators are used to separate, the oils, and water. The fish meal is produced from a blend of whole fish and/or silage that is cooked and sterilised. The resultant aqueous liquid by-products can be evaporated and the concentrates added back to the silage. These products often contain high levels of histamine and its derivatives that create off odours.

The hydrolysed protein provided by the method according to the invention may also be suitable for use in the pharmaceutical industry as a growth media.

By mixing the marine protein hydrolysate with milk UF permeates containing high level of carbohydrates, under controlled conditions and controlling the degree of hydrolysis, using fresh products, directly at the point of processing, also on board ship, and then using membrane technology in a central processing operation, the inventive process will enable producers to make enhanced feed. Such feed will enhance performance in feeding (growth, energy, weight gain, health). The new process will ensure that the level of histamine and other biogenic amines are below the thresholds of spoilage. The overall quality of whole meal and meal produced from silage will also be significantly increased.

An animal feed prepared by the combination of a clarified marine protein hydrolysate derived from either stickwater or silage, and blended with milk protein UF permeate is provided. One further advantage of the novel animal feed is that it does not per se contain any gene-modified organisms (GMO). Animal feed based on GMO has over the past few years been used extensively because of the difficulties of obtaining non- GMO soy protein and other vegetable materials.

Further features and advantages of the invention will become apparent from the following detailed desription of the invention.

## DETAILED DESRIPTION OF THE INVENTION

The aim of the invention is to provide

- new improved cost-effective healthy products with benefits for humans, animals and cultures
- improve flavour of the hydrolysate by controlling the enzymic reaction
- produce an improved composition (more digestible protein with a higher nutritional value, better quality, less monovalent ions, less biogenic amine compounds)
- add value to the fish meal produced from whole fish and/or silage by improving overall quality when the components are recombined without the water and undesirable solutes
- reduce energy costs by concentrating the peptides while removing water and the undesirable solutes contained in the NF permeate
- a new ultrafiltration process, using high membrane density ceramic ultrafiltration membranes with an improved mechanical strength, at lower unit cost and production cost than previously obtained with hollow fiber, or tubular, or other ceramics and a significant advantage in temperature of operation above 50° C and up to 90° C with a pH range 1 to 14
- a new nanofiltration, that selectively removes monovalent ions to improve the mineral balance, and removes unwanted NPN including biogenic amine compounds
- a combination of these ultrafiltration and nanofiltration processes that produces a more palatable and purer fish protein hydrolysate, and when used on stickwater produces a combined meal product of higher quality with respect to palatability and purity
- a blend of high quality fish protein and milk protein UF permeate to provide improved nutritional value together with a high energy source.

A schematic representation of the normal industry pathway and the new inventive pathway is shown in figure 1.

In one aspect of the invention the level of monovalent ions, biogenic amines and other rest products are reduced by combining the steps of UF and NF, and the level are reduced to at least 40% of the original. Additionally volatile organic soluble compounds are removed causing a reduced smell and an improve palatable product.

According to the invention the hydrolysed marine proteins may be obtained from any fish source to include, fish silage, fish by-products and stickwater from fish meal processing or from any aquatic species source to include, crab, shellfish, silage, by-products and stickwater and cooking water from processing or any combination thereof.

The invention relates to a method for the production of a hydrolysed marine protein product which is a process for the production of a hydrolysed marine protein product comprising a reduced level of monovalent ions and biogenic amine groups (NPN) and other rest products of enzymatic, cooking, acids and microbial degradation or any combination thereof, wherein the level of monovalent ions and biogenic amines is reduced by combining the steps of UF and NF, comprising the following steps:

- homogenizing by-product from fish and/or other marine industries/sources;
- controlled hydrolyses of said proteins and/or separation of stickwater from processing of marine raw material;
- ultrafiltration to provide a clarified marine protein hydrolysate;
- nanofiltration of the clarified UF permeate to remove monovalent ions, biogenic amines and water;
- drying of the NF concentrate and UF concentrate separately or a combination thereof by spray, vacuum or any other drying method.

The ultrafiltration may preferentially be performed by high density ceramic membranes. The nanofiltration may preferentially be performed by high selective membranes.

In one aspect of the invention the steps of ultrafiltration and nanofiltration can operate on stickwater and cooking water at temperatures of greater than 60° C.

A further aspect is a feed product comprising the hydrolysed marine protein product and any carbohydrate source, vitamins, oils, fats and trace elements.

The feed is preferentially used where a balanced diet are needed for humans and animals especially young pigs, dairy cattle, mink, fox, domestic pets and other species. This is accomplished by providing a feed of high quality containing beneficial fish protein, and reduced levels of monovalent ions and biogenic amines, and carbohydrate derived from any source, preferentially by-products of milk processing.

A further aspect is a micro-organism nutrition, wherein the hydrolysed marine protein product is used as a supplement for culture media.

A further aspect is that the UF and NF water removal process can exploit excess energy on ships hereby reducing cost and increasing the ships operation duration and radius.

**FIGURES**

Figure 1 is a flow chart showing how the production of hydrolysed marine protein product according to the invention differs from the normal industrial process.

Figure 2 is a curve showing the transmembrane pressure at a flow rate of 750 1pm

Figure 3 is a curve showing the transmembrane pressure at a flow rate of 850 1pm

Figure 4 is a curve showing the transmembrane pressure at a flow rate of 950 1pm

Figure 5 is a curve showing the transmembrane pressure at a flow rate of 1050 1pm

Figure 6 is a graph showing the UF permeation over time for different pressure of operation and feed solids.

Figure 7 is a graph showing the flux curve vs retentate concentration of stickwater at 80°C.

Figure 8 is a graph showing the reduction in flux rate against retentate volume concentration ratio (VCR).

Figure 9 is a graph showing the concentration using NF membranes of peptones, produced by enzymic hydrolysis of fish silage and ultrafiltration (permeate).

Figure 10 is a flow chart illustrating the removal of salts and biogenic amines by the combined UF and NF.

**EMBODIMENTS**

The following examples further describe the invention and are intended not to limit the scope of the invention.

**Materials and Methods**

**Ultrafiltration (UF) and Nanofiltration (NF) process**

The starting material of the hydrolysed marine protein product according to the invention can be any marine protein source such as fish, by-products of fish, fish silage and stickwater from fish meal processing. To illustrate the process stickwater and silage is used.

Stickwater at 80° C contains oil, proteins, salts amines and water. The first step is to remove oil by any suitable separation technique in the art. Following separation of the oil the UF is used to separate the proteins and remaining oils left after separation from the hydrolysed proteins amines and salts. The retentate, i.e. the concentrated proteins and oils contain the gelatinous proteins that can then be returned to the meal to improve binding.

The permeate, i. e. the liquid that goes through the UF membrane which is the feed to the NF contains salt, amines and water. Some of the amines in the permeate are desirable, i. e. peptides and peptones. Others like the biogenic amines are not. The content of biogenic amines is reduced by the NF membrane. These small molecular weight compounds pass through the membrane. The larger desirable amines are retained in the NF retentate. Salt removal is also beneficial in improving the product quality. The NF allows the passage of water, very small amines and salts. The use of NF also concentrates these peptones because most of the water is lost as the salts etc are removed as permeate.

If the peptones are produced from stickwater they can be added back to the meal. If the peptones are produced from the silage they can be separated and sold as Fish Protein Concentrate (FPC) In this case the UF retentate can be used as an enzyme product or added to meal.

**Part 1 - Determination of Operating conditions for the UF membrane**

The experiments were conducted using a SeparaTech CMF pilot plant with a Corning Ceramic element having a 0.01 micron pore size.

When constructing a test protocol for ceramic membranes a series of initial tests are run at different cross flow velocities. This enables the experimenter to determine the most suitable flow rate across the membrane surface and the resultant pressure drop.

The Corning membrane was chosen for its unique monolithic structure. Unlike all other ceramic membrane systems, the membrane fills the vessel which gives a very uniform pressure change across the filter for different flow conditions. This enabled the selection of the optimum parameters for the separation of the proteins, oil and the peptones.

The transmembrane pressure, TMP is defined as the average pressure drop across a membrane from one side to the other. This is calculated as follows

P1 → | Product Flow across the membrane - - - ► | →P2

Inlet pressure

Outlet Pressure

P3

Permeate pressure

$$\text{Transmembrane pressures (TMP)} \quad = \quad \frac{(P1 + P2)}{2} - P3$$

This is calculated for a series of different flow rates to determine the best operating conditions for the product. The pressure drop P1 -P2 is constant for a given flow rate. P1 and P3 are modified to give the best and most consistent permeate flow rate. 4 experiments were conducted at flow rates of 750, 850 950 and 1050 litres per minute (1pm) of flow. The results are shown in fig 2, 3, 4 and 5, respectively. The membrane manufacturer recommends a maximum TMP of 4 bar and a flow rate up to 1150 lpm.

The results achieved confirmed that the most consistent permeate flow was obtained at flow rates of between 750 and 850 lpm. As the average permeate flow was higher at 850 lpm this was the flow rate selected for the evaluation of the separation of peptones and salt from the protein. For all tests the temperature was 50°C.

**Part 2 - Production Trials**

Using the same recirculation flow rate of 850 lpm across the membrane, 3 different tests were performed.

**Part 2.1- Low inlet pressure**

The 1st test was run at an inlet pressure of 2 bar (low pressure) and the measurements recorded for permeate flow, corrected for temperature changes, the batch volume which was increased with diafiltration as concentration took place and the permeation rate reduced, and concentration ratio.

Table 1: Results following a run at low inlet pressure

| Time min | P1 Bar | P2 bar | P3 bar | Press Drop | TMP bar | Temp C | Perm lpm | Perm Corr | Cone lpm | Recir lpm | Feed Tank lts | Permeate volume lts | Totals Of Perm and conc | VCR |
|---|---|---|---|---|---|---|---|---|---|---|---|---|---|---|
| 0 | 2 | 1 | 0.67 | 1 | 0.83 | 55,8 | 9,4 | 8,85 | 120 | 850 | 1000 | | | 1,0 |
| 20 | 2 | 1 | 0.67 | 1 | 0.83 | 58,3 | 9,1 | 8,38 | 120 | 850 | 673 | 204 | 877 | 1,5 |
| 35 | 2 | 1 | 0.67 | 1 | 0.83 | 59,3 | 9,4 | 8,53 | 120 | 850 | 605 | 282 | 887 | 1,7 |
| 45 | 2 | 1 | 0.67 | 1 | 0.83 | 60,2 | 8,4 | 7,51 | 120 | 850 | 500 | 336 | 836 | 2,0 |
| 60 | 2 | 1 | 0.67 | 1 | 0.83 | 60,4 | 8,9 | 7,95 | 120 | 850 | 333 | 486 | 819 | 3,0 |
| 75 | 2 | 1 | 0.67 | 1 | 0.83 | 61,3 | 8,2 | 7,26 | 120 | 850 | 250 | 566 | 816 | 4,0 |
| 85 | 2 | 1 | 0.67 | 1 | 0.83 | 61,9 | 8,1 | 7,13 | 120 | 850 | 200 | 610 | 810 | 5,0 |
| 90 | 2 | 1 | 0.67 | 1 | 0.83 | 62,3 | 7,9 | 6,91 | 120 | 850 | 169 | 639 | 808 | 5,9 |
| 92 | 2 | 1 | 0.67 | 1 | 0.83 | 62,6 | 8,0 | 6,97 | 120 | 850 | 150 | 653 | 803 | 6,7 |
| 95 | 2 | 1 | 0.67 | 1 | 0.83 | 62,8 | 7,9 | 6,85 | 120 | 850 | 135 | 669 | 804 | 7,4 |
| 100 | 2 | 1 | 0.67 | 1 | 0.83 | 70,5 | 8,2 | 6,52 | 120 | 850 | 260 | 722 | 982 | 9,5 |
| 115 | 2 | 1 | 0.67 | 1 | 0.83 | 70,0 | 8,2 | 6,56 | 120 | 850 | 140 | 811 | 951 | 17,7 |

Abbreviations:

Pressure drop is difference between P1 and P2 TMP - transmembrane pressure Perm lpm - flow rate of permeate in lpm Perm Corr - permeate flow corrected for temperature Cone lpm - concentrate flow rate to batch tank Recirc lpm - concentrate recirculation flow rate lpm

Permeate volume lts - total volume of permeate obtained (litres) Totals of perm and conc - total volume of permeate and diafiltration water combined

**Part 2.2 - High inlet pressure**

After the initial test at 2 bar a second test was run with a higher baseline pressure to determine the effect on permeation flow and extent of the run. The results summarized in table 2 show that a lower baseline pressure generates a low flux but the rate of decline in flux is higher when a baseline ( driving pressure ) of 4 bar is used and the curve is steeper.

Table 2: Results following a run at high inlet pressure

| Time min | P1 bar | P2 bar | P3 bar | Press drop | TMP bar | Temp C | Perm lpm | Perm Corr lpm | Cone lpm | Recir Lpm | Feed Tank lts | Perm vol Lts | VCR |
|---|---|---|---|---|---|---|---|---|---|---|---|---|---|
| 0 | 3 | 2 | .67 | 1 | 1.67 | 51.6 | 13 | 12.8 | 120 | 850 | 1000 | | 1.0 |
| 15 | 3 | 2 | .67 | 1 | 1.67 | 51,6 | 13 | 12,8 | 120 | 850 | 704 | 375 | 1.6 |
| 25 | 3 | 2 | .67 | 1 | 1.67 | 53,4 | 11,9 | 11,5 | 120 | 850 | 611 | 463 | 1.9 |
| 35 | 3 | 2 | .67 | 1 | 1.67 | 54,8 | 11,4 | 10,9 | 120 | 850 | 472 | 600 | 2.5 |
| 45 | 3 | 2 | .67 | 1 | 1.67 | 55,4 | 10,5 | 10,0 | 120 | 850 | 405 | 685 | 3.2 |
| 55 | 3 | 2 | .67 | 1 | 1.67 | 56,1 | 10,7 | 10,1 | 120 | 850 | 311 | 761 | 4.2 |
| 55 | 3 | 2 | .67 | 1 | 1.67 | 56,5 | 10,0 | 9,4 | 120 | 850 | 266 | 807 | 5.2 |
| 60 | 3 | 2 | .67 | 1 | 1.67 | 57,9 | 9,8 | 9,0 | 120 | 850 | 200 | 873 | 7.9 |
| 63 | 3 | 2 | .67 | 1 | 1.67 | 58,7 | 10,0 | 9,1 | 120 | 850 | 160 | 910 | 11.1 |
| 66 | 3 | 2 | .67 | 1 | 1.67 | 59,4 | 9,6 | 8,7 | 120 | 850 | 130 | 941 | 17.0 |

Abbreviations: As in table 1.

**Part 2.3 - High Solids**

Finally, to test the variation in feed stream, a stickwater with higher dry matter content was used to see what effect this would have upon the system. The results are summarized in table 3. The concentration over time was much lower as the flux is also lower.

Table 3: Results following a run at a content of high solids

| Time | Time min | P1 bar | P2 bar | P3 Bar | Pres dro | TMP bar | Temp C | Per lpm | Perm Corr | Recir Imp | Feed tank lts | Permeate Vol | VCR |
|---|---|---|---|---|---|---|---|---|---|---|---|---|---|
| | 0 | 3 | 2 | .67 | .87 | 1.77 | 55 | .8.5 | 8.0 | 850 | 1000 | | |
| 11:00 | 15 | 3 | 2 | .67 | .87 | 1.77 | 56 | 8,5 | 8,0 | 850 | 673 | 327 | 1,5 |
| 11:15 | 30 | 3 | 2 | .67 | .87 | 1.77 | 55 | 7,2 | 6,9 | 850 | 565 | 435 | 1,8 |
| 11:30 | 45 | 3 | 2 | .67 | .87 | 1.77 | 56 | 6,4 | 6,0 | 850 | 469 | 531 | 2,1 |
| 11:45 | 60 | 3 | 2 | .67 | .87 | 1.77 | 60 | 5,2 | 4,7 | 850 | 391 | 609 | 2,6 |
| 12:00 | 75 | 3 | 2 | .67 | .87 | 1.77 | 64 | 5,0 | 4,3 | 850 | 316 | 684 | 3,2 |
| Abbreviations: As in table 1. | | | | | | | | | | | | | |

The results from tables 1, 2 and 3 were plotted in figure 6 to show the decline in flux over time and concentration ratio. The figure show that there is a more rapid decline in flux permeating at a higher pressure. The UF system was operated at 2 different pressures and with different feed solids to determine the possibilities for concentration of the gelatinous proteins, phospholipids and oils. The permeate from a UF membrane contains only the lower molecular weight compounds such as peptides, peptones, amino acids and salt that are small enough to pass through the membrane (< 50,000 Molecular Weight Cut Off). It is therefore better to operate the system at as low a pressure as possible when the stickwater solids are 4% to obtain the best separations.

**Part 2.4 Ultrafiltration of stickwater at 80°C - a continuous batch from standard production material**

After the determination of the optimum membrane operating pressure and the optimum cross flow rate, a production of a continuous batch test was run at 80°C. The results were as follows.

Table 4: Retentate concentration vs flux when processing fish silage Stickwater

| | Retentate solids (TS)% | Flux (lmh) | Flow rate (lph) |
|---|---|---|---|
| | 4.0 | 89,1 | 312 |
| | 5,0 | 70,9 | 248 |
| | 6,5 | 59,4 | 208 |
| | 8,0 | 52,6 | 184 |
| | 9,5 | 50,3 | 176 |
| | 11,0 | 49,1 | 172 |
| | 13,5 | 49,1 | 172 |
| | 15,0 | 49,1 | 172 |
| | 16,5 | 48,6 | 170 |
| | 18,0 | 48,0 | 1.68 |
| Abbreviations:<br>TS - total dissolved solids as a % of the total volume<br>Flux - flow rate of permeate through the membrane as litres per m$^2$ per hour | | | |

The results in table 4 and figure 10 shows that the stickwater after oil separation contains 4% TS dry matter. A mass balance calculation is shown in Fig.10. After concentration by UF the dry matter in the concentrate with a 5 x volumetric concentration is about 11 %. The dry matter content of the permeate is about 2.0% containing 80% of the ash and the undesirable amines. The increase in retentate solids affects the viscosity. Above a 5x concentration much higher driving pressure was required to maintain flux. The flux was continuous across the membrane, but to maintain this a higher driving pressure was required. This was automatically controlled using a Frequency inverter on the pump motor.

Samples were taken at different points and analysed for their dry matter. The results were extrapolated into a mass balance. See fig 10. All of the permeate was collected to provide a homogenous mix that would be the same as the permeate produced by a continuous UF membrane plant. This was then fed to a nanofiltration system to separate the undesirable amines and monovalent ions ( salts ) that were present. The concentrate from the NF was then blended with the UF concentrate to produce a 'whole meal' stickwater product without the most of the undesirable amines and salts.

**Part 2.5 - Nanofiltration of UF Permeate**

The NF membrane was a PTI Company TFC (Thin Film Composite) spiral wound element with 1.14 m$^2$ of area.
An operating pressure of 25 bar was used. The pressure drop across the membrane was 0.7 bar in line with the manufacturers recommendations. This was equivalent to a flow rate of 22 lpm into the membrane vessel.
The permeate flow rate was recorded and measurements taken of the retentate volume and dry matter. These values were used to calculate the volume concentration factor and the final dry matter achievable in the retentate. Permeate dry matter was also measured by refractometer and samples taken to analyse the amount of salt removed and determine the losses of non protein nitrogen and salt. For the NPN (non-protein nitrogen) and protein a standard Kjedahl method was used to determine total nitrogen. The salt analysis was performed using a standard Silver Nitrate titration method.
The level of undesirable amines in the retentate was measured using HPLC which is the standard method for determining the quality of fish meal and its classification in the fish industry.

The results were tabulated Table 5 and a theoretical mass balance constructed to show the proportions of each component after the combined processes. See fig 10

The added advantage for the UF and NF processes is that the permeate is diluted and the retentate concentrated. The result of this is that over 70% of the water is removed (see Fig 10) prior to evaporation, saving substantial costs in energy. In some cases where the stickwater is highly gelatinous because of the type of fish used, evaporation is eliminated, and a little more water is removed using the filter presses.

This creates substantial financial advantage for the user of a combined UF and NF system and reduced energy costs.

Table 5: NF concentration of UF permeate using a NF membrane with a surface area of 1.14 m$^2$

| Conc factor VCR | Flux(lmh) | sec/litre (l/flow rate) |
|---|---|---|
| 2 | 26,1 | 30 |
| 3 | 19,1 | 22 |
| 4 | 16,5 | 19 |
| 5 | 13,9 | 16 |
| 6 | 13,0 | 15 |
| 7 | 12,2 | 14 |
| 8 | 11,7 | 13,5 |
| 9 | 11,1 | 12,8 |
| 10 | 10,9 | 12,5 |

These results confirm that the diluted UF permeate can be concentrated up to 10 times using a nanofiltration membrane system.

By concentrating to a VCR of 10 times a 90% removal of the monovalent ions and undesirable amines present in the UF permeate is achieved. By using a combination of UF and NF the water removal is 72% and there is a 31% reduction in dry matter. Total solids 18.5% TS gelatinous material, solid at room temperature, liquid at 80 °C.

|  | NH3/VN | Salt |
|---|---|---|
| Stickwater | 28,36 % | 1,80 % |
| Permeates | 22,49 % | 1,33 % |
| Concentrate | 30,31 % | 1,60 % |

Abbreviations

NH3/VN - nitrogen contained as ammonia or as total volatile nitrogen (VN)
Salt - sodiume chloride measured using Silver Nitrate precipitation

The volumetric concentration factor was 10 x so the mass balance shows a 90% removal of water containing 66.5% of the salt and 71.4% of the NH3/VN

The permeate also contained peptones and peptide fractions. The total dissolved solids content of the permeate was 2.0%.TS

The alternative use of the UF system and NF for peptone produces different results. Current technology exists for the use of UF membranes to clarify peptones produced by enzymic and acid hydrolysis. By using Nanofiltration this can then also be further improved by removing the monovalent ions and the undesirable amines present, usually present as a result of using old or degraded fish waste as the raw material for the silage. If this is converted into meal then the product is of low quality unless the technology described above is applied.

A typical feed strength to the UF when fish waste is hydrolysed is about 12 % TS and the resulting permeate is about 8% dry matter.
Due to the hydroscopic nature of the peptones and the high osmotic pressure ( the pressure needed to remove water) it is necessary to operate the NF at 30 bar and use diafiltration after a 50% removal of water top obtain the necessary concentration and removal of salt and amines. The diafiltration ratio used was 1000 litres reduced to 500 and then 500 litres of water added to make up the volume to 1000 litres. The volume is then reduced as far as possible to get the required product with reduced salt and amines. The results obtained were in the region of an 8x concentration factor, with a resulting 87% removal of salt and amines.

Table 6: NF concentration of UF permeate produced from silage hydrolysed by acid and proteolytic enzymes using a PTI TFC membrane with a surface area of 1.14 m$^2$.

| Conc factor | Flux(lmh) | sec/litre (1/flow rate) |
|---|---|---|
| 2 | 12,2 | 14 |
| 1,5 | 9,6 | 11 |
| 2 | 7,8 | 9 |
| 2,5 | 6,1 | 7 |
| 3 | 9,6 | 11 |
| 3,5 | 7,8 | 9 |
| 4 | 6,6 | 7,6 |
| 4,5 | 6,1 | 7 |
| 5 | 5,7 | 6,5 |
| 5,5 | 5,5 | 6,3 |
| 6 | 5,3 | 6,1 |
| 6,5 | 5,2 | 6 |
| 7 | 5,0 | 5,8 |
| 7,5 | 5,0 | 5,8 |
| 8 | 5,0 | 5,8 |

Diafiltration water added when the volume concentration ratio was 3.0

The results confirm that the systems can also be used for the production of higher quality silage or clarified peptones made from waste fish materials.

The results show that marine proteins that are hydrolysed by cooking, acid, enzymic action or a combination of any of these can be processed using UF and then NF to produce a reduced level of amine and reduced level of salt ( monovalent ions) compared to the levels achieved by conventional methods without UF and NF.

To achieve these results a temperature of a mimimum 50 °C and ideally 80 °C must be used. At lower temperature the flux is too low due to the high viscosity of the proteins especially with some fish species.

The amines and monovalent ions are reduced to about 30% of the original mass in the feed stream. More than 70 % is removed.

The combined process results in a concentration of the oils and proteins (UF) and peptones (NF) that reduces the use of energy in evaporation because water has already been removed. In some cases where concentration is high enough and the protein gelatinous enough, evaporation becomes unnecessary. This results in high energy savings.

**Claims**

1. Process for the production of a hydrolysed marine protein product comprising a reduced level of monovalent ions and biogenic amine groups (NPN) and other rest products of enzymatic, cooking, acids and microbial degradation or any combination thereof, wherein the level of monovalent ions and biogenic amines is reduced by combining the steps of UF and NF, comprising the following steps:

   - homogenizing by-product from fish and/or other marine industries/sources;
   - controlled hydrolyses of said proteins and/or separation of stickwater from processing of marine raw material;
   - ultrafiltration to provide a clarified marine protein hydrolysate;
   - nanofiltration of the clarified UF permeate to remove monovalent ions, biogenic amines and water;
   - drying of the NF concentrate and UF concentrate separately or a combination thereof by spray, vacuum or any other drying method.

2. Process according to claim 1, wherein the ultrafiltration is performed by using high density ceramic membranes.

3. Process according to claim 1, wherein the nanofiltration is performed by using highly selective membranes.

4. Process according to claim 1, wherein the UF and NF water removal process can exploit excess energy on ships hereby reducing cost and increasing the ships operation duration and radius.

**5.** Process according to claim 1, substantially reducing the need of water evaporation and energy.

**6.** Process according to claim 1, wherein said ultrafiltration and nanofiltration can operate on stickwater and/or cooking water at temperatures of greater than 60 °C.

**Patentansprüche**

**1.** Verfahren zur Herstellung eines hydrolysierten Meeresproteinproduktes, das eine verringerte Menge einwertiger Ionen und biogener Amingruppen (NPN) und andere Restprodukte des enzymatischen, Koch-, Säure- und mikrobiellen Abbaus oder jede Kombination davon umfasst, worin die Menge einwertiger Ionen und biogener Amine durch Kombinieren der UF- und NF-Schritte verringert wird, umfassend die folgenden Schritte:

- Homogenisieren von Nebenprodukt aus Fisch- und/oder anderen Meeresindustrien/quellen;
- geregelte Hydrolysen der Proteine und/oder Abtrennung von Stickwater aus der Verarbeitung von Meeresrohmaterial;
- Ultrafiltration zum Erhalt eines geklärten Meeresproteinhydrolysats;
- Nanofiltration des geklärten UF-Permeats zum Entfernen einwertiger Ionen, biogener Amine und Wasser;
- Trocknen des NF-Permeats und des UF-Konzentrats, getrennt oder eine Kombination davon, durch ein Sprüh-, Vakuum- oder irgendein anderes Trocknungsverfahren.

**2.** Verfahren gemäß Anspruch 1, worin die Ultrafiltration unter Verwendung keramischer Membranen von hoher Dichte durchgeführt wird.

**3.** Verfahren gemäß Anspruch 1, worin die Nanofiltration unter Verwendung hochselektiver Membranen durchgeführt wird.

**4.** Verfahren gemäß Anspruch 1, worin das UF- und NF-Wasserentfernungsverfahren Überschussenergie auf Schiffen benutzen kann, wodurch Kosten verringert und die Betriebsdauer und der Aktionsradius der Schiffe erhöht werden.

**5.** Verfahren gemäß Anspruch 1, wobei die Notwendigkeit der Wasserverdampfung und der Energie wesentlich verringert werden.

**6.** Verfahren gemäß Anspruch 1, worin die Ultrafiltration und Nanofiltration an Stickwater und/oder Kochwasser bei Temperaturen von höher als 60 °C durchgeführt werden können.

**Revendications**

**1.** Procédé de production d'un produit protéinique marin hydrolysé, comprenant une quantité réduite d'ions monovalents, d'amines biogènes (NPN) et d'autres produits résiduels de dégradation par des enzymes, par la cuisson, par des acides et par des microbes, ou par n'importe quelle combinaison de ceux-ci, dans lequel la quantité d'ions monovalents et d'amines biogènes est réduite grâce à la combinaison des étapes d'UF et de NF, comprenant les étapes suivantes:

- l'homogénéisation d'un sous-produit provenant de poisson et/ou d'autres industries/sources marines;
- l'hydrolyse contrôlée desdites protéines et/ou la séparation des effluents liquides provenant du traitement de matériaux bruts marins;
- l'ultrafiltration destinée à fournir un hydrolysat protéinique marin clarifié;
- la nanofiltration du perméat d'UF clarifié afin d'éliminer les ions monovalents, les amines biogènes et l'eau;
- la déshydratation du perméat de NF et du concentré d'UF séparément, ou d'une combinaison de ceux-ci, par pulvérisation, par mise sous vide, ou par tout autre procédé de déshydratation.

**2.** Procédé selon la revendication 1, dans lequel l'ultrafiltration est effectuée en utilisant des membranes céramiques à haute densité.

**3.** Procédé selon la revendication 1, dans lequel la nanofiltration est effectuée en utilisant des membranes hautement sélectives.

**4.** Procédé selon la revendication 1, dans lequel le procédé d'élimination de l'eau par UF et NF peut exploiter l'énergie en excès à bord des navires, réduisant ainsi le coût et augmentant la durée et le rayon d'action des opérations réalisées à bord des navires.

**5.** Procédé selon la revendication 1, réduisant de manière significative les besoins d'évaporation d'eau et d'énergie.

**6.** Procédé selon la revendication 1, dans lequel lesdites ultrafiltration et nanofiltration peuvent être réalisées sur les effluents liquides et/ou l'eau de cuisson à des températures supérieures à 60 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4427558 A, Maubois
- EP 09512837 A1
- US 6168815 B
- US 6036983 A
- US 6214585 B
- WO 0128353 A
- EP 0951837 A1

**Non-patent literature cited in the description**

- Enzymatic Hydrolysis of by products from fish processing. *Journal of Science Food & Agriculture,* 2000, vol. 80, 581-589
- Functional Properties of Fish Hydrolysate from Herring [Clupea harengus. *J Food Sci,* 1999, vol. 64 (6
- Nutrient requirements of Mink and Foxes. National Academy Press, 1982